# EUROPEAN PATENT APPLICATION

(11) **EP 4 507 420 A1**
(43) Date of publication of application: **12.02.2025**
(21) Application number: 22936207.4
(22) Date of filing: 08.04.2022
(51) Int. Cl.: H04W 72/04, H04L 5/00

(54) **FREQUENCY DOMAIN RESOURCE CONFIGURATION METHOD AND APPARATUS**

(71) Applicant: Beijing Xiaomi Mobile Software Co., Ltd., Beijing 100085 (CN)
(72) Inventor: QIAO, Xuemei, Beijing 100085 (CN); BAI, Yingshuang, Beijing 100085 (CN)
(74) Representative: Gunzelmann, Rainer
(86) International application number: PCT/CN2022/085967
(87) International publication number: WO 2023/193270

(57) **Abstract**

Disclosed in the embodiments of the present application are a frequency domain resource configuration method and apparatus. The method comprises: receiving indication information sent by a network device; and, according to the indication information, determining frequency domain resources occupied by a control resource set (CORESET), wherein the frequency domain resources occupied by the CORESET are continuous frequency domain resource units, or the frequency domain resources occupied by the CORESET are at least two discontinuous frequency domain resource unit groups, the frequency domain resource unit groups being obtained by dividing a plurality of frequency domain resource units according to one of at least two granularities. By means of changing an allocation mode of frequency domain resources of a terminal device or flexibly configuring an allocation granularity of the frequency domain resources, the terminal device can support a higher aggregation level as much as possible, thus effectively improving the transmission performance of a downlink channel, expanding the coverage of the downlink channel, improving system communication efficiency, effectively reducing a resource waste, and improving a resource utilization rate.

## Description

### TECHNICAL FIELD

The disclosure relates to a field of communication technologies, and more particularly to a method and an apparatus for configuring frequency domain resources.

### BACKGROUND

In the related art, a control resource set (CORESET) for a terminal occupies 1 to 3 continuoussymbols in a time domain, and is used to configurefrequency domain resources in a frequency domain in a way similar to a physical downlink shared channel (PDSCH) resource allocation type 0.

In Release 18, it is proposed that a bandwidth is further reduced for a reduced capability (RedCap) terminal, to support a service type which is not high in a data rate and is sensitive to manufacturing cost, such as a factory sensor, and at the same time, still possibly to support a configuration of a sub-carrier spacing (SCS) such as 15KHz or 30KHz, causing a reduction in available frequency domain resources in a bandwidth range. If an allocation way on frequency domain resources of the CORESET in the related art is still employed, it may be caused that some frequency domain resources in the bandwidth range may not be utilized all the time.

### SUMMARY

According to a first aspect of embodiments of the disclosure, there is provided a method for configuring frequency domain resources. The method is performed by a terminal, and includes:
receiving indication information sent by a network device; and
determining frequency domain resources occupied by a CORESET based on the indication information.

The frequency domain resources occupied by the CORESET are continuous frequency domain resource units; or,
the frequency domain resources by the CORESET are at least tw continuous goups of frequency domain resource units, and the group of frequency domain resource units is obtained by dividing a plurality of frequency domain resource units based on one of at least two granularities.

Alternatively, determining the frequency domain resources occupied by the CORESET based on the indication information includes:
determining a start position of the frequency domain resources occupied by the CORESET and a size of the frequency domain resources occupied by the CORESET based on the indication information.

Alternatively, determining the frequency domain resources occupied by the CORESET based on the indication information includes:
obtaining a start position of the frequency domain resources occupied by the CORESET specified by a protocol;
determining a size of the frequency domain resources occupied by the CORESET based on the indication information; and
determining the frequency domain resources occupied by the CORESET based on the start position of the frequency domain resources occupied by the CORESET and the size of the frequency domain resources.

Alternatively, determining the frequency domain resources occupied by the CORESET based on the indication information includes:
obtaining a start position of the frequency domain resources occupied by the CORESET specified by a protocol;
in which the indication information indicates a maximum aggregation level of the terminal and the number of time domain symbols;
determining a size of the frequency domain resources occupied by the CORESET based on the maximum aggregation level of the terminal and the number of the time domain symbols, in which there is a function relationship among the size of the frequency domain resources, the maximum aggregation level of the terminal and the number of the time domain symbols; and
determining the frequency domain resources occupied by the CORESET based on the start position of the frequency domain resources occupied by the CORESET and the size of the frequency domain resources.

Alternatively, the indication information includes at least one bit, and the indication information indicates a position of at least one group of frequency domain resource units in the plurality of frequency domain resource units configured by the network device.

Alternatively, the method further includes:
in response to there being a remaining resource element group (REG) that is not mapped to a control channel element (CCE), releasing the remaining REG.

Alternatively, the size of the frequency domain resources matches a bandwidth supported by the terminal.

Alternatively, the granularity is determined based on at least one of:
granularity indication information;
a bandwidth supported by the terminal;
the number of bits of the indication information;
the number of resource element groups (REGs) occupied by a CCE; or
the number of time domain symbols configured by the network device.

Alternatively, the CORESET is CORESET#0, the indication information is remaining minimum system information (RMSI), and the indication information is configured to determine a length of the frequency domain resources for the CORESET#0 and the corresponding number of symbols for the CORESET#0 from at least one combination of the length of the frequency domain resources and the corresponding number of symbols agreed by a protocol.

According to a second aspect of embodiments of the disclosure, there is provided a method for configuring frequency domain resources. The method is performed by a network device, and includes:
sending indication information to a terminal;
The indication information is configured to determine frequency domain resources occupied by a CORESET.

The frequency domain resources occupied by the CORESET are continuous frequency domain resource units; or,
the frequency domain resources occupied by the CORESET are at least two discontinuous groups of frequency domain resource units, and the group of frequency domain resource unit is obtained by dividing a plurality of frequency domain resource units based on one of at least two granularities.

Alternatively, the indication information is configured to determine a start position of the frequency domain resources occupied by the CORESET and a size of the frequency domain resources occupied by the CORESET.

The start position of the frequency domain resources occupied by the CORESET and the size of the frequency domain resources occupied by the CORESET are configured to determine the frequency domain resources occupied by the CORESET.

Alternatively, the indication information is configured to determine a size of the frequency domain resources occupied by the CORESET.

The size of the frequency domain resources occupied by the CORESET is configured to determine the frequency domain resource occupied by the CORESET.

Alternatively, the indication information indicates a maximum aggregation level of the terminal and the number of time domain symbols.

The maximum aggregation level of the terminal and the number of the time domain symbols are configured to determine a size of the frequency domain resources occupied by the CORESET, in which there is a function relationship among the size of the frequency domain resources, the maximum aggregation level of the terminal and the number of the time domain symbols.

The size of the frequency domain resources occupied by the CORESET is configured to determine the frequency domain resources occupied by the CORESET.

Alternatively, the indication information includes at least one bit, and the indication information indicates a position of at least one group of frequency domain resource units in the plurality of frequency domain resource units configured by the network device.

Alternatively, in response to there being a remaining resource element group (REG) that is not mapped to a CCE, the remaining REG is released.

Alternatively, a size of the frequency domain resources matches a bandwidth supported by the terminal.

Alternatively, the granularity is determined based on at least one of:
granularity indication information;
a bandwidth supported by the terminal;
the number of bits of the indication information;
the number of REGs occupied by a CCE; or
the number of time domain symbols configured by the network device.

Alternatively, the CORESET is CORESET#0, the indication information is RMSI, and the indication information is configured to determine a length of frequency domain resources for the CORESET#0 and the corresponding number of symbols for the CORESET#0 from at least one combination of the length of frequency domain resources and the corresponding number of symbols agreed by a protocol.

According to a third aspect of embodiments of the disclosure, there is provided an apparatus for configuring frequency domain resources. The apparatus is applied to a terminal. The apparatus includes:
a transceiving unit, configured to receive indication information sent by a network device; and
a processing unit, configured to determine frequency domain resources occupied by a CORESET based on the indication information.

The frequency domain resources occupied by the CORESET are continuous frequency domain resource units; or,
the frequency domain resources occupied by the CORESET are at least two discontinuous groups of frequency domain resource units, and the group of frequency domain resource unit is obtained by dividing a plurality of frequency domain resource units based on one of at least two granularities.

Alternatively, the processing unit is configured to:
determine a start position of the frequency domain resources occupied by the CORESET and a size of the frequency domain resources occupied by the CORESET based on the indication information.

Alternatively, the processing unit is configured to:
obtain a start position of the frequency domain resources occupied by the CORESET specified by a protocol;
determine a size of the frequency domain resources occupied by the CORESET based on the indication information; and
determine the frequency domain resources occupied by the CORESET based on the start position of the frequency domain resources occupied by the CORESET and the size of the frequency domain resources.

Alternatively, the processing unit is configured to:
obtain a start position of the frequency domain resources occupied by the CORESET specified by a protocol;
in which the indication information indicates a maximum aggregation level of the terminal and the number of time domain symbols;
determine a size of the frequency domain resources occupied by the CORESET based on the maximum aggregation level of the terminal and the number of the time domain symbols, in which there is a function relationship among the size of the frequency domain resources, the maximum aggregation level of the terminal and the number of the time domain symbols; and
determine the frequency domain resources occupied by the CORESET based on the start position of the frequency domain resources occupied by the CORESET and the size of the frequency domain resources.

Alternatively, the indication information includes at least one bit, and the indication information indicates a position of at least one group of frequency domain resource units in the plurality of frequency domain resource units configured by the network device.

Alternatively, the processing unit is further configured to:
in response to there being a remaining REG that is not mapped to a CCE, release the remaining REG.

Alternatively, the size of the frequency domain resources matches a bandwidth supported by the terminal.

Alternatively, the granularity is determined based on at least one of:
granularity indication information;
a bandwidth supported by the terminal;
the number of bits of the indication information;
the number of REGs occupied by a CCE; or
the number of time domain symbols configured by the network device.

Alternatively, the CORESET is CORESET#0, the indication information is RMSI, and the indication information is configured to determine a length of the frequency domain resources for the CORESET#0 and the corresponding number of symbols for the CORESET#0 from at least one combination of the length of the frequency domain resources and the corresponding number of symbols agreed by a protocol.

According to a fourth aspect of embodiments of the disclosure, there is provided an apparatus for configuring frequency domain resources. The apparatus is applied to a network device. The apparatus includes:
a transceiving unit, configured to send indication information to a terminal.

The indication information is configured to determine frequency domain resources occupied by a CORESET.

The frequency domain resources occupied by the CORESET are continuous frequency domain resource units; or,
the frequency domain resources occupied by the CORESET are at least two discontinuous groups of frequency domain resource units, and the group of frequency domain resource units is obtained by dividing a plurality of frequency domain resource unit based on one of at least two granularities.

Alternatively, the indication information is configured to determine a start position of the frequency domain resources occupied by the CORESET and a size of the frequency domain resources occupied by the CORESET.

The start position of the frequency domain resources occupied by the CORESET and the size of the frequency domain resources occupied by the CORESET are configured to determine the frequency domain resources occupied by the CORESET.

Alternatively, the indication information is configured to determine a size of the frequency domain resources occupied by the CORESET.

The size of the frequency domain resources occupied by the CORESET is configured to determine the frequency domain resource occupied by the CORESET.

Alternatively, the indication information indicates a maximum aggregation level of the terminal and the number of time domain symbols.

The maximum aggregation level of the terminal and the number of the time domain symbols are configured to determine a size of the frequency domain resources occupied by the CORESET, in which there is a function relationship among the size of the frequency domain resources, the maximum aggregation level of the terminal and the number of the time domain symbols.

The size of the frequency domain resources occupied by the CORESET is configured to determine the frequency domain resources occupied by the CORESET.

Alternatively, the indication information includes at least one bit, and the indication information indicates a position of at least one group of frequency domain resource units in the plurality of frequency domain resource units configured by the network device.

Alternatively, in response to there being a remaining REG that are not mapped to a CCE, the remaining REG is released.

Alternatively, the size of the frequency domain resources matches a bandwidth supported by the terminal.

Alternatively, the granularity is determined based on at least one of:
granularity indication information;
a bandwidth supported by the terminal;
the number of bits of the indication information;
the number of REGs occupied by a CCE; or
the number of time domain symbols configured by the network device.

Alternatively, the CORESET is CORESET#0, the indication information is RMSI. The indication information is configured to determine a length of the frequency domain resources for the CORESET#0 and the corresponding number of symbols for the CORESET#0 from at least one combination of the length ofs frequency domain resource and the corresponding number of symbols agreed by a protocol.

According to a fifth aspect of embodiments of the disclosure, a communication device is provided. The device includes a processor and a memory. The memory has a computer program stored thereon. The processor is configured to execute the computer program stored in the memory to cause the device to execute the method for configuring frequency domain resources according to the first aspect.

According to a sixth aspect of embodiments of the disclosure, a communication device is provided. The device includes a processor and a memory. The memory has a computer program stored thereon. The processor is configued to execute the computer program stored in the memory to cause the device to execute the method for configuring frequency domain resources according to the second aspect.

According to a seventh aspect of embodiments of the disclosure, a communication device is provided. The device includes a processor and an interface circuit. The interface circuit is configured to receive code instructions and transmit the code instructions to the processor. The processor is configured to run the code instructions to execute the method for configuring frequency domain resources according to the first aspect.

According to an eighth aspect of embodiments of the disclosure, a communication device is provided. The device includes a processor and an interface circuit. The interface circuit is configured to receive code instructions and transmit the code instructions to the processor. The processor is configured to run the code instructions to execute the method for configuring frequency domain resources according to the second aspect.

According to a ninth aspect of embodiments of the disclosure, a computer-readable storage medium is provided. The computer-readable storage medium is configured to store instructions. When the instructions are executed, the method for configuring frequency domain resources according to the first aspect is realized.

According to a tenth aspect of embodiments of the disclosure, a computer-readable storage medium is provided. The computer-readable storage medium is configured to store instructions. When the instructions are executed, the method for configuring frequency domain resources according to the second aspect is realized.

According to an eleventh aspect of embodiments of the disclosure, a computer program is provided. When the computer program is run on a computer, the computer is caused to execute the method for configuring frequency domain resources according to the first aspect is implemented.

According to a twelfth aspect of embodiments of the disclosure, a computer program is provided. When the computer program is run on a computer, the computer is caused to execute the method for configuring frequency domain resources according to the second aspect is implemented.

According to the method and apparatus for configuring frequency domain resources provided in embodiments of the disclosure, the indication information sent by the network device is received, an thed frequency domain resources occupied by the CORESET are determined based on the indication information, in which the frequency domain resources occupied by the CORESET are continuous frequency domain resource units; or, the frequency domain resources occupied by the CORESET are at least two discontinuous groups of frequency domain resource units, and the group of frequency domain resource units is obtained by dividing the plurality of frequency domain resource units based on one of at least two granularities. By changing an allocation way on the frequency domain resources for the terminal or flexibly configuring the allocated granularity of the frequency domain resources, the terminal may support a larger aggregation level as much as possible, thus effectively improving transmission performance of a downlink channel, enhancing a coverage of the downlink channel, improving a system communication efficiency, effectively reducing the resource waste, and improving a resource utilization rate.

Part of additional aspects and advantages of the disclosure will be given in the following description, and part will become obvious from the following description, or be understood through the practice of the disclosure.

### BRIEF DESCRIPTION OF THE DRAWINGS

To describe a technical solution in the embodiments of the disclosure or the related art more clearly, description is made below to accompanying drawings required in the embodiments or the background technology of the disclosure.
FIG. 1a is a schematic diagram illustrtating an architecture of a communication system according to an embodiment of the disclosure.
FIG. 1b is a schematic diagram illustrtating configuration of frequency domain resources in a related art according to an embodiment of the disclosure.
FIG. 2 is a flow chart illustrtating a method for configuring frequency domain resources according to an embodiment of the disclosure.
FIG. 3 is a flow chart illustrtating a method for configuring frequency domain resources according to an embodiment of the disclosure.
FIG. 4 is a flow chart illustrtating a method for configuring frequency domain resources according to an embodiment of the disclosure.
FIG. 5 is a flow chart illustrtating a method for configuring frequency domain resources according to an embodiment of the disclosure.
FIG. 6 is a flow chart illustrtating a method for configuring frequency domain resources according to an embodiment of the disclosure.
FIG. 7 is a flow chart illustrtating a method for configuring frequency domain resources according to an embodiment of the disclosure.
FIG. 8 is a block diagram illustrtating an apparatus for configuring frequency domain resources according to an embodiment of the disclosure.
FIG. 9 is a block diagram illustrtating an apparatus for configuring frequency domain resources according to an embodiment of the disclosure.
FIG. 10 is a block diagram illustrtating a device for configuring frequency domain resources according to another embodiment of the disclosure.
FIG. 11 is a block diagram illustrtating a chip according to an embodiment of the disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with embodiments of the disclosure. Instead, they are merely examples of the apparatuses and methods consistent with some aspects of the embodiments of the disclosure as detailed in the appended claims.

Terms described in the embodiments of the disclosure are only for the purpose of describing specific embodiments, but should not be construed to limit the embodiments of the disclosure. As used in the embodiments of the disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although the terms such as "first", "second", "third", etc. may be used in embodiments of disclosure to describe various information, these information should not be limited by these terms. These terms are only used to distinguish the same type of information from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

Description will be made in detail below to embodiments of the disclosure. Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and do not be understood a limitation of the disclosure.

In order to better understand a method for configuring frequency domain resources disclosed in the embodiments of the disclosure, firstly, description is made below to a communication system applicable to embodiments of the disclosure.

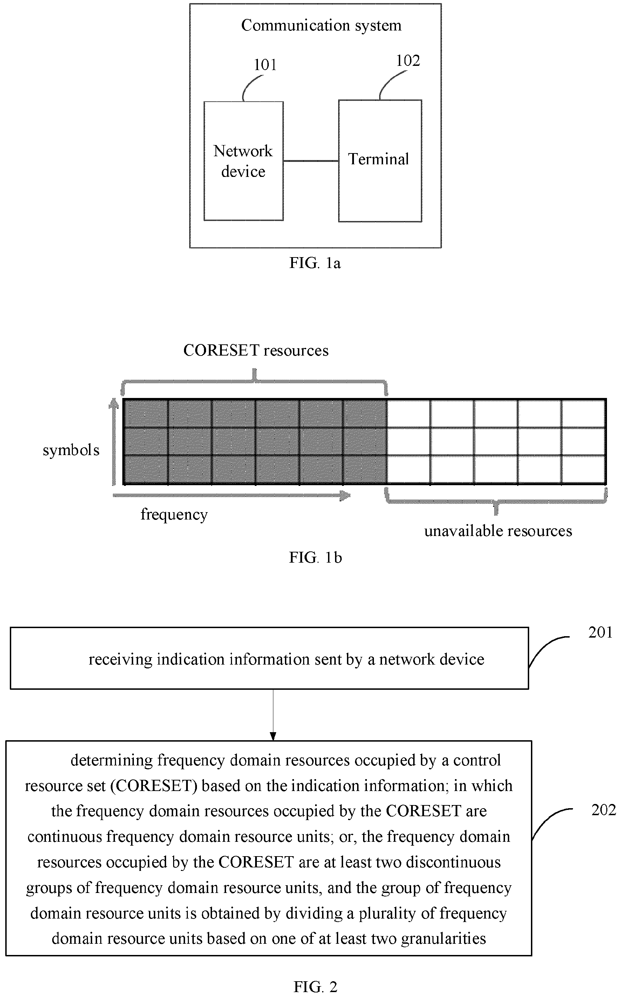

Referring to FIG, 1a, FIG. 1a is a schematic diagram illustrating an architecture of a communication system according to an embodiment of the disclosure. The communication system may include, but is not limited to, a first network device, a second network device, and a terminal. The number and form of devices illustrated in FIG. 1a are only used for example and do not constitute a limitation in embodiments of the disclosure, and two or more network devices and two or more terminals may be included in an actual application. The communication system illustrated in FIG. 1a takes an example of including one network device 101 and one terminal 102.

It should be noted that the technical solution of embodiments of the disclosure may be applied to various communication systems, such as, a long term evolution (LTE) system, a 5th generation (5G) mobile communication system, a 5G new radio (NR) system, or another future new mobile communication system.

The network device 101 in embodiments of the disclosure is an entity for sending or receiving a signal in a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Detailed technologies and detailed device forms employed by the network device are not limited in embodiments of the disclosure. The network device provided in embodiments of the disclosure may be combined by a central unit (CU) and a distributed unit (DU). The CU may also be referred to as a control unit. A protocol layer of the network device, such as the base station, may be separated by employing a CU-DU structure, in which, part of functions of the protocol layer are centrally controlled by the CU, while part or all of remaining functions of the protocol layer are distributed in the DU. The DU is controlled by the CU.

The terminal 102 in embodiments of the disclosure is an entity for receiving or sending a signal in a user side, such as, a mobile phone. The terminal may also be referred to as a terminal, a user equipment (UE), a mobile station (MS), a mobile terminal (MT), or the like, or may be a reduced capability UE (RedCap UE), an evolved reduced capability UE (eRedCap UE), or the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in embodiments of the disclosure.

In the related art, a control resource set (CORESET) for the terminal occupies 1 to 3 continuous symbols in a time domain, and frequency domain resources are configured in a frequency domain in a way similar to a PDSCH resource allocation type 0. A basic granularity for allocating the frequency domain resources is 6 resource blocks (RBs).

In Release 18, it is proposed that a bandwidth is further reduced for a RedCap terminal, to support a service type which is not high in data rate and is sensitive to manufacturing cost, such as a factory sensor, and at the same time, still possibly to support a configuration of a sub-carrier spacing such as 15KHz or 30KHz, causing a reduction in available frequency domain resources in a bandwidth range.

When the sub-carrier spacing (SCS) is 30KHz, 11 available RBs merely exist at a bandwidth with 5MHz. In case that a configuration way on frequency domain resources of the CORESET in the related art is still employed, and that configuration is performed on the frequency domain resources of the CORESET with 6 RBs as the basic granularity, for a physical downlink control channel (PDCCH), some frequency domain resources in the bandwidth range may not be utilized all the time. As illustrated in FIG. 1b, FIG. 1b is a schematic diagram illustrating configuration of frequency domain resources in the related art according to an embodiment of the disclosure. In this case, the number of REGs included in the CORESET may be reduced, and it is caused that a larger aggregation level may not be supported. As illustrated in FIG. 1b, a maximum aggregation level (AL) may be supported to be 2, thus affecting a coverage and a transmission performance of the PDCCH in a downlink transmission for the terminal.

It may be understood that the communication system described in embodiments of the disclosure is intended to explain the technical solution of embodiments of the disclosure more clearly, and does not constitute a limitation to the technical solution according o embodiments of the disclosure. The ordinary skill in the art knows that, with evolution of a system architecture and appearance of a new business scene, the technical solution according to embodiments of the disclosure are equally applied to a similar technical issue.

Description is made below in detail to a method and an apparatus for configuring frequency domain resources according to the disclosure with reference to the accompanying drawings.

Referring to FIG. 2, FIG. 2 is a flow chart illustrating a method for configuring frequency domain resources according to an embodiment of the disclosure. It should be noted that the method for configuring frequency domain resources in embodiments of the disclosure is performed by a terminal. As illustrated in FIG. 2, the method may include the following.

At block 201, indication information sent by a network device is received.

In embodiments of the disclosure, the terminal receives the indication information sent by the network device. The indication information indicates the terminal to determine frequency domain resources occupied by a control resource set (CORESET).

In some implementations, the indication information is configured to indicate that the frequency domain resources occupied by the CORESET are continuous frequency domain resource units.

In some implementations, the indication information includes at least one bit, and each bit of the indication information may indicate whether a group of frequency domain resource units corresponding to the bit is the frequency domain resources occupied by the CORESET.

The frequency domain resource unit may be an RB, a physical resource block (PRB), a virtual resource block (VRB), a common resource block (CRB), or the like.

At block 202, the frequency domain resources occupied by the CORESET are determined based on the indication information, in which, the frequency domain resources occupied by the CORESET are continuous frequency domain resource units; or, the frequency domain resources occupied by the CORESET are at least two discontinuous groups of frequency domain resource units. The group of frequency domain resource units is obtained by dividing a plurality of frequency domain resource units based on one of at least two granularities.

In embodiments of the disclosure, the terminal may determine the frequency domain resources occupied by the CORESET based on the indication information.

In an implementation of embodiments of the disclosure, the frequency domain resources occupied by the CORESET are the continuous frequency domain resource units.

**In** some implementations, the terminal may determine a start position of the frequency domain resources occupied by the CORESET and a size of the frequency domain resources occupied by the CORESET based on the indication information, thus determining the frequency domain resources occupied by the CORESET.

In some implementations, the terminal may obtain the start position of the frequency domain resources occupied by the CORESET specified in a protocol, and determine the size of the frequency domain resources occupied by the CORESET based on the indication information, thus determining the frequency domain resources occupied by the CORESET.

In some implementations, the terminal may obtain the start position of the frequency domain resources occupied by the CORESET specified in the protocol, and determine a maximum aggregation level of the terminal and the number of time domain symbols based on the indication information, and further determine the size of the frequency domain resources occupied by the CORESET based on the maximum aggregation level of the terminal and the number of time domain symbols, thus determining the frequency domain resources occupied by the CORESET.

**In** some implementations, the size of the frequency domain resources occupied by the CORESET may also be determined based on the maximum aggregation level of the terminal, the number of PDCCH candidate channels supported by the maximum aggregation level, and the number of the time domain symbols.

Alternatively, the size of the frequency domain resources may match a bandwidth supported by the terminal, to avoid resource waste. In embodiments of the disclosure, the matching refers to that the size of the frequency domain resources is as close as possible to a length of the bandwidth supported by the terminal.

It may be understood that, in embodiments of the disclosure, the bandwidth supported by the terminal may be a bandwidth, or a bandwidth part (BWP).

In embodiments of the disclosure, the size of the frequency domain resources may also be referred to as a length of the frequency domain resources, that is, the number of frequency domain resource units included in the frequency domain resources.

In another implementation of embodiments of the disclosure, the frequency domain resources occupied by the CORESET are the at least two discontinuous groups of frequency domain resource units. The group of frequency domain resource units is obtained by dividing the plurality of frequency domain resource units based on one of at least two granularities.

**In** some implementations, the indication information includes at least one bit. The indication information may indicate a position of the at least one group of frequency domain resource units in the plurality of frequency domain resource units configured by the network device. Each bit of the indication information may indicate whether thegroup of frequency domain resource units corresponding to the bit is the frequency domain resources occupied by the CORESET.

**In** some implementations, the granularity is determined based on at least one of: granularity indication information; a bandwidth supported by the terminal; the number of bits of the indication information; the number of resource element groups (REGs) occupied by a control channel element (CCE); or the number of time domain symbols configured by the network device. An allocated granularity may be configured flexibly based on an actual condition, thus further improving a resource utilization rate, and avoiding the resource waste.

In some embodiments, in response to there being a remaining REG that is not mapped to a CCE, the remaining REG is released, which may further improve the resource utilization rate, and avoid the resource waste.

As described above, in the related art, the indication information indicates that the frequency domain resources occupied by the CORESET are the at least two discontinuous groups of frequency domain resource units. The group of frequency domain resource unit includes 6 frequency domain resource units, and the allocated granularity of the frequency domain resources of the CORESET is 6.

In some implementations of embodiments of the disclosure, the at least two discontinuous groups of frequency domain resource units occupied by the CORESET are obtained by dividing the plurality of frequency domain resource units based on one of at least two granularities, that is, the granularity allocated tothe frequency domain resources is changed.

In some implementations of embodiments of the disclosure, the frequency domain resources occupied by the CORESET are the continuous frequency domain resource units, that is, an allocation way on the frequency domain resources is changed.

In conclusion, the indication information sent by the network device is received, and the frequency domain resources occupied by the CORESET are determined based on the indication information. The frequency domain resources occupied by the CORESET are the continuous frequency domain resource units; or, the frequency domain resources occupied by the CORESET are the at least two discontinuous groups of frequency domain resource units. The group of frequency domain resource units is obtained by dividing the plurality of frequency domain resource units based on one of at least two granularities. By changing the allocation way on the frequency domain resources for the terminal or flexibly configuring the allocated granularity of the frequency domain resources, the terminal may support a larger aggregation level as much as possible, thus effectively improving a transmission performance of a downlink channel, enhancing a coverage of the downlink channel, improving a system communication efficiency, effectively reducing the resource waste, and improving the resource utilization rate.

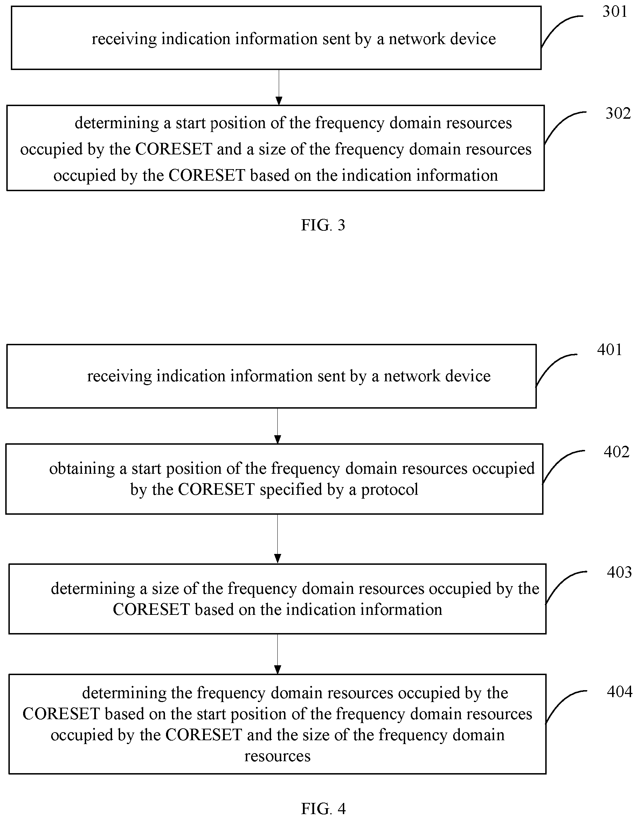

Referring to FIG. 3, FIG. 3 is a flow chart illustrtating a method for configuring frequency domain resources according to an embodiment of the disclosure. It should be noted that the method for configuring frequency domain resources in embodiments of the disclosure is performed by the terminal. As illustrated in FIG. 3, the method may include the following.

At block 301, indication information sent by a network device is received.

In embodiments of the disclosure, the terminal receives the indication information sent by the network device. The indication information is configured to indicate the terminal to determine frequency domain resources occupied by a CORESET.

In embodiments of the disclosure, the indication information may be a resource indication value (RIV) joint code, and the terminal may determine a start position and a length of frequency domain resources allocated to the CORESET based on the RIV code.

The RIV code is determined by the network device based on the start position and the length of the frequency domain resources allocated to the CORESET. The terminal may decode the RIV code after receiving the RIV code, and determine the start position and the length of the frequency domain resources allocated to the CORESET.

As an example, the RIV code may be determined in the following way.

**If** (*L* - 1) ≤ |*N*/2|, *RIV = N*(*L* - 1) + *RB*_{START}; otherwise, *RIV = N*(*N* - *L +* 1) + (*N* - 1 - *RB*_{START}), where *N* represents the number of frequency domain resource units included in a bandwidth supported by the terminal, *L* represents the size of the frequency domain resources, *RB*_{START} represents the start position of the frequency domain resources, and *RIV* represents the RIV code and is a value represented by at least 1 bit.

At block 302, a start position of the frequency domain resources occupied by the CORESET and a size of the frequency domain resources occupied by the CORESET are determined based on the indication informsation.

**In** embodiments of the disclosure, the terminal may receive the RIV code sent by the network device, and may determine the start position of the frequency domain resources occupied by the CORESET and the size of the frequency domain resources occupied by the CORESET based on the RIV code.

In some implementations, the terminal may determine the start position and the length of the frequency domain resources corresponding to an RIV value of the RIV codeby looking up a table based on the RIV value.

In some implementations, the terminal may also decode the RIV code in a calculation way, to determine the start position and the length of the frequency domain resources corresponding to the RIV value.

As an example, the RIV code may be decoded in the following way.

It is assumed that P represents the size of the frequency domain resources, O represents the start position of the frequency domain resources, N represents the number of frequency domain resource units included in the bandwidth supported by the terminal, and x represents the RIV value, and it is defined:
a = floor (x/N) +1, b = x mod N, where floor (•) represents rounding down, and mod represents a modulus operation.

Then:
if a + b > N, P = N + 2 - a, O = N - 1 - b; otherwise, P = a, O = b.

In embodiments of the disclosure, the terminal determines the frequency domain resources occupied by the CORESET after determining the start position and the length of the frequency domain resources occupied by the CORESET.

It may be understood that, in embodiments of the disclosure, the frequency domain resources occupied by the CORESET are continuous frequency domain resource units.

Further, in some embodiments, in response to there being a remaining REG that is not mapped to a CCE, the remaining REG is released. The REG that may not be mapped to the CCE is released to other terminals or channels for use, to further improve the resource utilization rate and reduce the resource waste.

In some implementations, in order to further save resources and reduce waste of the frequency domain resources, when the size of the frequency domain resources is configured, the network device determines a product of the size of the frequency domain resources and the number of symbols occupied by the CORESET in a time domain configured by the network device, and the product may be exactly divided by 6, that is, the number of REGs included in the CORESET is an integer multiple of 6.

It should be noted that, since a transmission of the PDCCH is performed on at least one CCE, one CCE includes 6 REGs. In case that the product of the size of the frequency domain resources and the number of symbols occupied by the CORESET in the time domain configured by the network device is not an integer multiple of 6, there may be one or more remaining REGs that may not be mapped to the CCE. The one or more remaining REGs may not be configured to the transmission ofthe PDCCH all the time, causing waste of the frequency domain resources. In case that the product of the size of the frequency domain resources and the number of symbols occupied by the CORESET in the time domain configured by the network device may be exactly divided by 6, all the REGs included in the CORESET may be mapped to the CCE.

In some embodiments, an aggregation level may also be considered in a procedure of determining of the size of the frequency domain resources. When there is a relatively large aggregation level, the size of the frequency domain resources matches the bandwidth supported by the terminal, and the size of the frequency domain resources is as close as possible to a length of the bandwidth supported by the terminal.

In conclusion, the indication information sent by the network device is received, the start position of the frequency domain resources occupied by the CORESET and the size of the frequency domain resources occupied by the CORESET are determined based on the indication information. By changing the allocation way of the frequency domain resources for the terminal, the terminal may support a larger aggregation level as much as possible, thus effectively improving a transmission performance of a downlink channel, enhancing a coverage of the downlink channel, improving a system communication efficiency, effectively reducing the resource waste, and improving a resource utilization rate.

Referring to FIG. 4, FIG. 4 is a flow chart illustrating a method for configuring frequency domain resources according to an embodiment of the disclosure. It should be noted that the method for configuring frequency domain resources in embodiments of the disclosure is performed by a terminal. As illustrated in FIG. 4, the method may include the following.

At block 401, indication information sent by a network device is received.

In embodiments of the disclosure, the terminal receives the indication information sent by the network device. The indication information is configrued to indicate the terminal to determine frequency domain resources occupied by a CORESET.

In embodiments of the disclosure, the indication information indicates a size of the frequency domain resources.

At block 402, a start position of the frequency domain resources occupied by the CORESET specified by a protocol is obtained.

In embodiments of the disclosure, the start position of the frequency domain resources occupied by the CORESET specified by the protocol may be obtained.

Alternatively, the start position of the frequency domain resources may be a frequency domain resource unit with a minimum frequency of a bandwidth of the terminal, a frequency domain resource unit with a maximum frequency of the bandwidth of the terminal, or a center frequency of the bandwidth of the terminal.

At block 403, a size of the frequency domain resources occupied by the CORESET is determined based on the indication information.

In embodiments of the disclosure, the indication information indicates a size of the frequency domain resources occupied by the CORESET. The terminal may determine the size of the frequency domain resources based on the indication information.

At block 404, the frequency domain resources occupied by the CORESET are determined based on the start position of the frequency domain resources occupied by the CORESET and the size of the frequency domain resources.

In embodiments of the disclosure, the terminal may determine the frequency domain resources occupied by the CORESET based on the start position and the length of the frequency domain resources after determining the start position and the length of the frequency domain resources occupied by the CORESET.

It may be understood that, in embodiments of the disclosure, the frequency domain resources occupied by the CORESET are continuous frequency domain resource units.

Alternatively, the frequency domain resources occupied by the CORESET may be determined based on an obtained start position which is the frequency domain resource unit with the minimum frequency of the bandwidth of the terminal and a size N of the frequency domain resources indicated by the indication information, in which the the determined frequency domain resources are first N frequency domain resource units in an ascending seuqnece of frequencies in the bandwidth of the terminal.

Alternatively, the frequency domain resources occupied by the CORESET may be determined based on an obtained start position which is the frequency domain resource unit with the maximum frequency of the bandwidth of the terminal and the size N of the frequency domain resources indicated by the indication information, in which the determined frequency domain resources are first N frequency domain resource units with a descending order of frequencies in the bandwidth of the terminal.

Alternatively, the frequency domain resources occupied by the CORESET may be determined based on an obtained start position which is the center frequency of the bandwidth of the terminal and the size N of the frequency domain resources indicated by the indication information, in which the determined frequency domain resources are floor (N/2) frequency domain resource units allocated upwards (towards a high frequency) from a center frequency and N-floor (N/2) frequency domain resource units allocated downwards (towards a low frequency) from the center frequency. It may also be determined that the frequency domain resources occupied by the CORESET are floor (N/2) frequency domain resource units allocated downwards (towards the low frequency) from the center frequency and N-floor (N/2) frequency domain resource units upwards (towards the high frequency) from the center frequency, where floor (•) represents rounding down.

Further, in some embodiments, in response to there being a remaining REG that is not mapped to a CCE, the remaining REG is released. The REG that may not be mapped to the CCE may be released to other terminals or channels for use, to further improve the resource utilization rate and reduce the resource waste.

In some implementations, in order to further save resources and reduce waste of frequency domain resources, when the size of the frequency domain resources is configured, the network device determines a product of the size of the frequency domain resources and the number of symbols occupied by the CORESET in a time domain configured by the network device, and the product may be exactly divided by 6, that is, the number of REGs included in the CORESET is an integer multiple of 6.

It should be noted that, since the transmission of the PDCCH is performed on at least one CCE, one CCE includes 6 REGs. In case that the product of the size of the frequency domain resources and the number of symbols occupied by the CORESET in the time domain configured by the network device is not an integer multiple of 6, there may be one or more remaining REGs that may not be mapped to the CCE. The one or more remaining REGs may not be used to the transmission of the PDCCH all the time, causing the waste of the frequency domain resources. In case that the product of the size of the frequency domain resources and the number of symbols occupied by the CORESET in the time domain configured by the network device may be exactly divided by 6, all the REGs included in the CORESET may be mapped to the CCE.

In some embodiments, an aggregation level may also be considered in a procedure of determining of the size of the frequency domain resources. When there is a relatively large aggregation level, the size of the frequency domain resources matches a bandwidth supported by the terminal, and the size of the frequency domain resources is as close as possible to a length of the bandwidth supported by the terminal.

In conclusion, the indication information sent by the network device is received, the start position of the frequency domain resources occupied by the CORESET specified by the protocol is obtained. The size of the frequency domain resources occupied by the CORESET is determined based on the indication information. The frequency domain resources occupied by the CORESET are determined based on the start position of the frequency domain resources occupied by the CORESET and the size of the frequency domain resources. By changing an allocation way on the frequency domain resources for the terminal, the terminal may support a larger aggregation level as much as possible, thus effectively improving transmission performance of a downlink channel, enhancing a coverage of the downlink channel, improving a system communication efficiency, effectively reducing the resource waste, and improving the resource utilization rate.

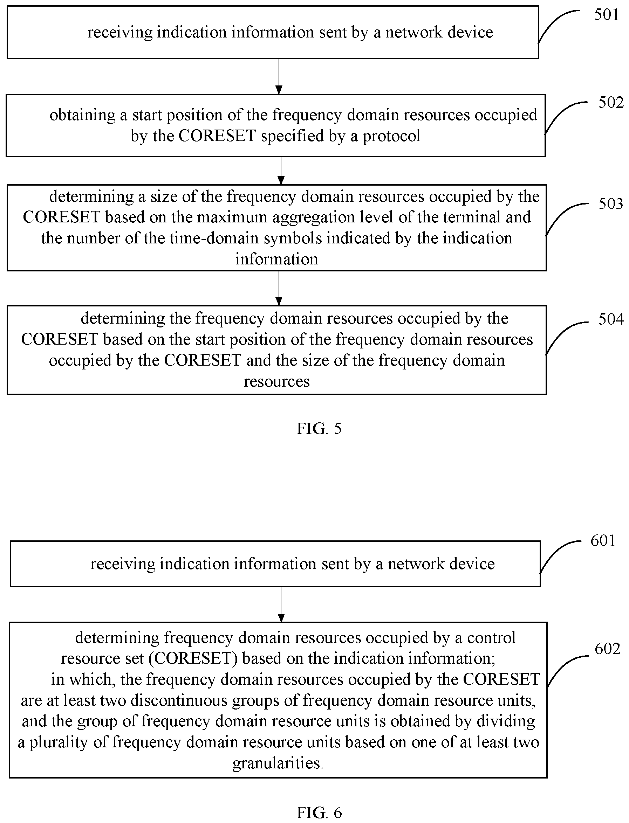

Referring to FIG. 5, FIG. 5 is a flow chart illustrating a method for configuring frequency domain resources according to an embodiment of the disclosure. It should be noted that the method for configuring frequency domain resources in embodiments of the disclosure is performed by a terminal. As illustrated in FIG. 5, the method may include the following.

At block 501, indication information sent by a network device is received.

In embodiments of the disclosure, the terminal receives the indication information sent by the network device. The indication information is configrued to indicate the terminal to determine frequency domain resources occupied by a CORESET.

In embodiments of the disclosure, the indication information indicates a maximum aggregation level of the terminal and the number of time domain symbols.

At block 502, a start position of the frequency domain resources occupied by the CORESET specified by a protocol is obtained.

In embodiments of the disclosure, the start position of the frequency domain resources occupied by the CORESET specified by the protocol may be obtained.

Alternatively, the start position of the frequency domain resources may be a frequency domain resource unit with a minimum frequency of a bandwidth of the terminal, a frequency domain resource unit with a maximum frequency of the bandwidth of the terminal, or a center frequency of the bandwidth of the terminal.

At block 503, a size of the frequency domain resources occupied by the CORESET is determined based on the maximum aggregation level of the terminal and the number of time domain symbols indicated by the indication information.

There is a function relationship among the size of the frequency domain resources, the maximum aggregation level of the terminal and the number of the time domain symbols.

In embodiments of the disclosure, the size of the frequency domain resources may be determined based on a certain rule according to the maximum aggregation level of the terminal and the number of time domain symbols.

In an example, the size of the frequency domain resources is N, the maximum aggregation level AL of the terminal is a, the number of time domain symbols is s, and the rule may be N ≥ a × 6/s. For example, the maximum aggregation level of the terminal is 4, and the number of time domain symbols is 3, then the size of the frequency domain resources are at least 8 frequency domain resource units.

In some implementations, the size of the frequency domain resources occupied by the CORESET may also be determined based on a certain rule according to the maximum aggregation level of the terminal, the number of PDCCH candidate channels supported by the maximum aggregation level, and the number of time domain symbols.

In an example, the size of the frequency domain resources is N, the maximum aggregation level AL of the terminal is a, the number of PDCCH candidate channels supported by the maximum aggregation level is M, the number of time domain symbols is s, and the rule may be N ≥ a × 6 × M/s. For example, the maximum aggregation level of the terminal is 4, the number of PDCCH candidate channels supported by the maximum aggregation level is 2, and the number of time domain symbols is 3, then the size of the frequency domain resources are at least 16 frequency domain resource units.

At block 504, the frequency domain resources occupied by the CORESET are determined based on the start position of the frequency domain resources occupied by the CORESET and the size of the frequency domain resources.

In embodiments of the disclosure, the terminal may determine the frequency domain resources occupied by the CORESET based on the start position and a length of the frequency domain resources after determining the start position and the length of the frequency domain resources occupied by the CORESET.

It may be understood that, in embodiments of the disclosure, the frequency domain resources occupied by the CORESET are continuous frequency domain resource units.

Alternatively, the frequency domain resources occupied by the CORESET may be determined based on an obtained start position which is the frequency domain resource unit with the minimum frequency of the bandwidth of the terminal and the size N of the frequency domain resources determined at block 503, in which the determined frequency domain resources are first N frequency domain resource units with an asending order of frequencies in the bandwidth of the terminal.

Alternatively, the frequency domain resources occupied by the CORESET may be determined based on an obtained start position which is the frequency domain resource unit with the maximum frequency of the bandwidth of the terminal and the size N of the frequency domain resources determined at block 503, in which, the determined frequency domain resources are first N frequency domain resource units with a descending order of frequencies in the bandwidth of the terminal.

Alternatively, the frequency domain resources occupied by the CORESET may be determined based on an obtained start position which is the center frequency of the bandwidth of the terminal and the size N of the frequency domain resources determined at block 503, in which the determined frequency domain resources are floor (N/2) frequency domain resource units allocated upwards (towards a high frequency) from the center frequency and N-floor (N/2) frequency domain resource units allocated downwards (towards a low frequency) from the center frequency. It may also be determined that the frequency domain resources occupied by the CORESET are floor (N/2) frequency domain resource units allocated downwards (towards the low frequency) from the center frequency and N-floor (N/2) frequency domain resource units upwards (towards the high frequency) from the center frequency, where floor (•) represents rounding down.

Further, in some embodiments, in response to there being a remaining REG that is not mapped to a CCE, the remaining REG is released. The REG that may not be mapped to the CCE may be released to other terminals or channels for use, to further improve the resource utilization rate and reduce the resource waste.

In some implementations, in order to further save resources and reduce waste of frequency domain resources, when the size of the frequency domain resources is configured, the network device determines a product of the size of the frequency domain resources and the number of symbols occupied by the CORESET in a time domain configured by the network device, and the product may be exactly divided by 6, that is, the number of REGs included in the CORESET is an integer multiple of 6.

It should be noted that, since the transmission of the PDCCH is performed on at least one CCE, one CCE includes 6 REGs. In case that the product of the size of the frequency domain resources and the number of symbols occupied by the CORESET in a time domain configured by the network device is not an integer multiple of 6, there may be one or more remaining REGs that may not be mapped to the CCE. The one or more remaining REGs may not be used to the transmission of the PDCCH all the time, causing the waste of the frequency domain resources. In case that the product of the size of the frequency domain resources and the number of symbols occupied by the CORESET in the time domain configured by the network device may be exactly divided by 6, all the REGs included in the CORESET may be mapped to the CCE.

In some embodiments, an aggregation level may also be considered in a procedure of determining of the size of the frequency domain resources. When there is a relatively large aggregation level, the size of the frequency domain resources matches a bandwidth supported by the terminal, and the size of the frequency domain resources is as close as possible to the bandwidth supported by the terminal.

In conclusion, the indication information sent by the network device is received. The start position of the frequency domain resources occupied by the CORESET specified by the protocol is obtained. The size of the frequency domain resources occupied by the CORESET is determined based on the maximum aggregation level of the terminal and the number of time domain symbols indicated by the indication information. The frequency domain resources occupied by the CORESET are determined based on the start position of the frequency domain resources occupied by the CORESET and the size of the frequency domain resources. By changing an allocation way on the frequency domain resources for the terminal, the terminal may support a larger aggregation level as much as possible, thus effectively improving a transmission performance of a downlink channel, enhancing a coverage of the downlink channel, improving a system communication efficiency, effectively reducing the resource waste, and improving the resource utilization rate.

Referring to FIG. 6, FIG. 6 is a flow chart illustrating a method for configuring frequency domain resources according to an embodiment of the disclosure. It should be noted that the method for configuring frequency domain resources in embodiments of the disclosure is performed by a terminal. As illustrated in FIG. 5, the method may include the following.

At block 601, indication information sent by a network device is received.

In embodiments of the disclosure, the terminal receives the indication information sent by the network device. The indication information is configured to indicate the terminal to determine frequency domain resources occupied by a CORESET.

In embodiments of the disclosure, the frequency domain resources occupied by the CORESET are at least two discontinuous groups of frequency domain resource units. The indication information indicates indicates a position of at least one group of frequency domain resource units in a plurality of frequency domain resource units configured by the network device. The indication information includes at least one bit, and each bit of the indication information may indicate whether a group of frequency domain resource units corresponding to the bit is the frequency domain resource occupied by the CORESET.

The frequency domain resource unit may be an RB, a PRB, a VRB, a CRB, or the like.

At block 602, the frequency domain resources occupied by the CORESET are determined based on the indication information, in which the frequency domain resources occupied by the CORESET are at least two discontinuous groups of frequency domain resource units, and the group of frequency domain resource units is obtained by dividing the plurality of frequency domain resource units based on one of at least two granularities.

In embodiments of the disclosure, the at least two discontinuous groups of frequency domain resource units occupied by the CORESET may be determined based on an indication of the indication information. The group of frequency domain resource units is obtained by dividing theplurality of frequency domain resource units based on one of at least two granularities.

It may be understood that the granularity is the number of frequency domain resource units included in one group of frequency domain resources, or the number of frequency domain resource units corresponding to each bit in the indication information.

In an example, alternatively, the granularity may be 2, 3, or 6. In other words, one group of frequency domain resources of the CORESET may include 2 frequency domain resource units, 3 frequency domain resource units, or 6 frequency domain resource units. That is, 1 bit in the indication information may indicate 2 corresponding frequency domain resource units, 3 corresponding frequency domain resource units, or 6 corresponding frequency domain resource units.

It should be noted that, in embodiments of the disclosure, each group of frequency domain resources in the at least one group of frequency domain resources of one CORESET includes the same number of frequency domain resource units.

In embodiments of the disclosure, an allocated granularity of the frequency domain resources is changed, thus flexibly configuring the allocated granularity of the frequency domain resources, such that the terminal may support a larger aggregation level as much as possible.

In some embodiments, the granularity may be determined based on at least one of:
granularity indication information;
a bandwidth supported by the terminal;
the number of bits of the indication information;
the number of REGs occupied by a CCE; or
the number of time domain symbols configured by the network device.

Alternatively, the allocated granularity of the frequency domain resources of the CORESET may be determined from a granularity set including at least two granularities based on the granularity indication information. For example, the granularity set is {2, 3, 6}, and the terminal may determine the allocated granularity of the frequency domain resources of the CORESET from the granularity set {2, 3, 6} based on the granularity indication information.

Alternatively, the allocated granularity of the frequency domain resources of the CORESET may be determined based on the bandwidth supported by the terminal and the number of bits of the indication information. The number of frequency domain resource units indicated by each bit of the indication information may be determined based on the bandwidth supported by the terminal and the number of bits of the indication information, and then the allocated granularity of the frequency domain resources of the CORESET is also determined.

It may be understood that, in embodiments of the disclosure, the bandwidth supported by the terminal may be a bandwidth, or may be a BWP.

Alternatively, the allocated granularity of the frequency domain resources of the CORESET may be determined based on the number of REGs occupied by the CCE and the number of time domain symbols configured by the network device.

Alternatively, the allocated granularity of the frequency domain resource of the CORESET may be determined based on the number of time domain symbols configured by the network device. In an example, for example, in case that the number of time domain symbols configured by the network device is 2 or 4, it is determined that the allocated granularity of the frequency domain resources of the CORESET is 3; andin case that the number of time domain symbols configured by the network device is 3, it is determined that the allocated granularity of the frequency domain resources of the CORESET is 2.

In some implementations, there is at least one combination of the number of time domain symbols and a granularity, and the number of time domain symbols and a granularity corresponding to an index may be indicated by the index.

Further, in some embodiments, in response to there being a remaining REG that is not mapped to a CCE, the remaining REG is released. The REG that may not be mapped to the CCE may be released to other terminals or channels for use, to further improve the resource utilization rate and reduce the resource waste.

In some embodiments, when there is a relatively large aggregation level, the frequency domain resources of the CORESET matches the bandwidth supported by the terminal, and the size of the frequency domain resources is as close as possible to the bandwidth supported by the terminal.

In conclusion, the indication information sent by the network device is received, the frequency domain resources occupied by the CORESET are determined based on the indication information. The frequency domain resources occupied by the CORESET are at least two discontinuous groups of frequency domain resource units, and the group of frequency domain resource units is obtained by dividing THE plurality of frequency domain resource units based on one of at least two granularities. By flexibly configuring the allocated granularity of the frequency domain resources, the terminal may support a larger aggregation level as much as possible, thus effectively improving a transmission performance of a downlink channel, enhancing a coverage of the downlink channel, improving a system communication efficiency, effectively reducing the resource waste, and improving the resource utilization rate.

It should be noted that a resource configuration way on CORESET#0 is different from that on other CORESETs. Therefore, in embodiments of the disclosure, in case that the CORESET is the CORESET#0, the indication information is remaining minimum system information (RMSI), and the RMSI is configured to determine a length of the frequency domain resources for the CORESET#0 and a corresponding number of symbols for the CORESET#0 from at least one combination of the length of the frequency domain resources and the corresponding number of symbols agreed by a protocol.

In an example, when an SCS is 30 kHz, the at least one combination of the length of the frequency domain resources and the corresponding number of symbols agreed by the protocol may be illustrated in a following table.

**Table 1 Configurations of the length of the frequency domain resources for the CORESET#0 and the corresponding number of symbols for the CORESET#0**

| **Length of frequency domain resources /Number of RBs** | **Number of symbols** |
|---|---|
| 10 | 3 |
| 8 | 3 |
| 6 | 3 |
| 6 | 2 |
| 6 | 1 |

In order to improve the resource utilization rate, to reduce unnecessary resource waste, and to improve transmission efficiency and quality, when the combination of the length of the frequency domain resources for the CORESET#0 and the corresponding number of symbols for the CORESET#0 is designed, there needs to be met as much as possible that the length of the frequency domain resources does not exceed the bandwidth supported by the terminal, and the number of REGs (that is, a product of the number of RBs and the number of symbols) included in the combination of the length of the frequency domain resources and the corresponding number of symbols is an integer multiple of 6 as much as possible.

**It** may be understood that the table is merely an example, for example, some possible combinations of the length of the frequency domain resources for the CORESET#0 and the corresponding number of symbols for the CORESET#0, or more combinations may be designed to meet and adapt to more scenes and bandwidth requirements. The table is merely an example but does not limit embodiments of the disclosure.

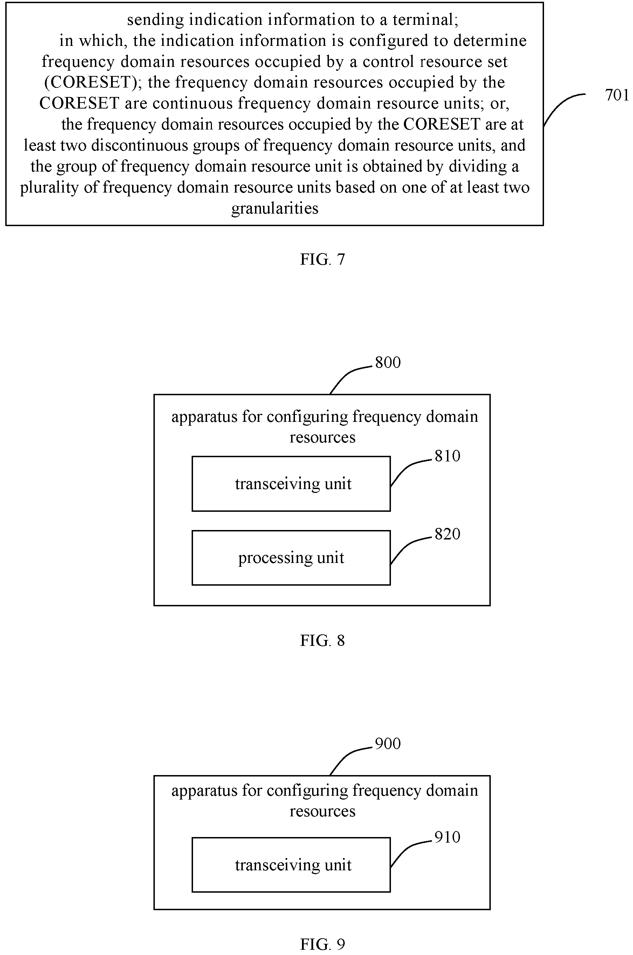

Referring to FIG. 7, FIG. 7 is a flow chart illustrating a method for configuring frequency domain resources according to an embodiment of the disclosure. It should be noted that the method for configuring frequency domain resources in embodiments of the disclosure is performed by a network device. As illustrated in FIG. 7, the method may include the following.

At block 701, indication information is sent to a terminal. The indication information is configured to determine frequency domain resources occupied by a CORESET. The frequency domain resources occupied by the CORESET are continuous frequency domain resource units; or, the frequency domain resources occupied by the CORESET are at least two discontinuous groups of frequency domain resource units. The group of frequency domain resource unit is obtained by dividing a plurality of frequency domain resource units based on one of at least two granularities.

In embodiments of the disclosure, the network device sends the indication information to the terminal. The indication information is configrued to indiate the terminal to determine the frequency domain resources occupied by the CORESET. The terminal may determine the frequency domain resources occupied by the CORESET based on the indication information.

In an implementation of embodiments of the disclosure, the frequency domain resources occupied by the CORESET are continuous frequency domain resource units.

In some some implementations, the terminal may determine a start position of the frequency domain resources occupied by the CORESET and a size of the frequency domain resources occupied by the CORESET based on the indication information, thus determining the frequency domain resources occupied by the CORESET.

In some implementations, the terminal may obtain the start position of the frequency domain resources occupied by the CORESET specified in a protocol, and determine the size of the frequency domain resources occupied by the CORESET based on the indication information, thus determining the frequency domain resources occupied by the CORESET.

In some implementations, the terminal may obtain the start position of the frequency domain resources occupied by the CORESET specified in the protocol, determine a maximum aggregation level of the terminal and the number of time domain symbols based on the indication information, and further determine the size of the frequency domain resources occupied by the CORESET based on the maximum aggregation level of the terminal and the number of time domain symbols, thus determining the frequency domain resources occupied by the CORESET.

In some implementations, the size of the frequency domain resources occupied by the CORESET may also be determined based on the maximum aggregation level of the terminal, the number of PDCCH candidate channels supported by the maximum aggregation level, and the number of the time domain symbols.

Alternatively, the size of the frequency domain resources may match a bandwidth supported by the terminal, to avoid resource waste.

It may be understood that, in embodiments of the disclosure, the bandwidth supported by the terminal may be a bandwidth or a BWP.

In another implementation of embodiments of the disclosure, the frequency domain resources occupied by the CORESET are at least two discontinuous groups of frequency domain resource units, and the group of frequency domain resource units is obtained by dividing the plurality of frequency domain resource units based on one of at least two granularities.

In some implementations, the indication information includes at least one bit, the indication information may indicate a position of the at least one group of frequency domain resource units in the plurality of frequency domain resource units configured by the network device, and each bit of the indication information may indicate whether a group of frequency domain resource units corresponding to the bit is occupied by the CORESET.

The frequency domain resource unit may be an RB, a PRB, a VRB, a CRB, or the like.

In some implementations, the granularity is determined based on at least one of: granularity indication information; a bandwidth supported by the terminal; the number of bits of the indication information; the number of REGs occupied by a CCE; or the number of time domain symbols configured by the network device, which may flexibly configure an allocated granularity based on an actual condition, thus further improving the resource utilization rate, and avoiding the the resource waste.

In some embodiments, in response to there being a remaining REG that is not mapped to a CCE, the remaining REG is released, such that the resource utilization rate may be further improved, and the resource waste is avoided.

In embodiments of the disclosure, in case rgar the CORESET is CORESET#0, the indication information is RMSI, and the RMSI is configured to determine a length of the frequency domain resources for the CORESET#0 and the corresponding number of symbols for the CORESET#0 from at least one combination of the length of the frequency domain resources and the corresponding number of symbols agreed by the protocol.

In conclusion, the indication information is sent to the terminal. The indication information is configured to determine the frequency domain resources occupied by the CORESET. The frequency domain resources occupied by the CORESET are the continuous frequency domain resource units; or, the frequency domain resources occupied by the CORESET are the at least two discontinuous groups of frequency domain resource units. The group of frequency domain resource unit is obtained by dividing the plurality of frequency domain resource units based on one of at least two granularities. By changing an allocation way on the frequency domain resources for the terminal or flexibly configuring the allocated granularity of the frequency domain resources, the terminal may support a larger aggregation level as much as possible, thus effectively improving transmission performance of a downlink channel, enhancing a coverage of the downlink channel, improving a system communication efficiency, effectively reducing the resource waste, and improving the resource utilization rate.

Corresponding to the method for configuring frequency domain resources provided in the foregoing several embodiments, the disclosure further provides an apparatus for configuring frequency domain resources. Since the apparatus for configuring frequency domain resources provided in embodiments of the disclosure corresponds to the method provided in the foregoing several embodiments, implementations of the method for configuring frequency domain resources are also applicable to the apparatus for configuring frequency domain resources provided in the following embodiments, which are not described in detail in the following embodiments.

Referring to FIG. 8, FIG. 8 is a block diagram illustrating an apparatus for configuring frequency domain resources according to an embodiment of the disclosure.

As illustrated in FIG. 8, the apparatus 800 for configuring frequency domain resources includes a transceiving unit 810 and a processing unit 820.

The transceiving unit 810 is configured to receive indication information sent by a network device.

The processing unit 820 is configured to determine frequency domain resources occupied by a CORESET based on the indication information.

The frequency domain resources occupied by the CORESET are continuous frequency domain resource units; or,

the frequency domain resources occupied by the CORESET are at least two discontinuous groups of frequency domain resource units, and the group of frequency domain resource units is obtained by dividing a plurality of frequency domain resource units based on one of at least two granularities.

Alternatively, the processing unit 820 is specifically configured to:
determine a start position of the frequency domain resources occupied by the CORESET and a size of the frequency domain resources occupied by the CORESET based on the indication information.

Alternatively, the processing unit 820 is specifically configured to:
obtain the start position of the frequency domain resources occupied by the CORESET specified by a protocol;
determine the size of the frequency domain resources occupied by the CORESET based on the indication information; and
determine the frequency domain resources occupied by the CORESET based on the start position of the frequency domain resources occupied by the CORESET and the size of the frequency domain resources.

Alternatively, the processing unit 820 is specifically configured to:
obtain the start position of the frequency domain resources occupied by the CORESET specified by a protocol;
in which the indication information indicates a maximum aggregation level of the terminal and the number of time domain symbols;
determine the size of the frequency domain resources occupied by the CORESET based on the maximum aggregation level of the terminal and the number of the time domain symbols, in which there is a function relationship among the size of the frequency domain resources, the maximum aggregation level of the terminal and the number of the time domain symbols; and
determine the frequency domain resources occupied by the CORESET based on the start position of the frequency domain resources occupied by the CORESET and the size of the frequency domain resources.

Alternatively, the indication information includes at least one bit, and the indication information indicates a position of at least one group of frequency domain resource units in the plurality of frequency domain resource units configured by the network device.

Alternatively, the processing unit 820 is further configured to:
in response to there being a remaining resource element group (REG) that is not mapped to a control channel element (CCE), release the remaining REG.

Alternatively, the size of the frequency domain resources matches a bandwidth supported by the terminal.

Alternatively, the granularity is determined based on at least one of:
granularity indication information;
a bandwidth supported by the terminal;
the number of bits of the indication information;
the number of REGs occupied by a CCE; or
the number of time domain symbols configured by the network device.

Alternatively, the CORESET is CORESET#0, the indication information is RMSI, and the indication information is configured to determine a length of the frequency domain resources for the CORESET#0 and the corresponding number of symbols for the CORESET#0 from at least one combination of the length of frequency domain resources and the corresponding number of symbols agreed by a protocol.

With the apparatus for configuring frequency domain resources in the embodiment, the indication information sent by the network device is received, the frequency domain resources occupied by the CORESET may be determined based on the indication information, in which the frequency domain resources occupied by the CORESET are continuous frequency domain resource units; the frequency domain resources occupied by the CORESET are at least two discontinuous groups of frequency domain resource units. The group of frequency domain resource units is obtained by dividing the plurality of frequency domain resource units based on one of at least two granularities. By changing an allocation way on the frequency domain resources for the terminal or flexibly configuring the allocated granularity of the frequency domain resources, the terminal may support a larger aggregation level as much as possible, thus effectively improving a transmission performance of a downlink channel, enhancing a coverage of the downlink channel, improving a system communication efficiency, effectively reducing the resource waste, and improving a resource utilization rate.

Referring to FIG. 9, FIG. 9 is a block diagram illustrating an apparatus for configuring frequency domain resources according to an embodiment of the disclosure.

As illustrated in FIG. 9, the apparatus 900 for configuring frequency domain resources includes a transceiving unit 910.

The transceiving unit 910 is configured to send indication information to a terminal.

The indication information is configured to determine frequency domain resources occupied by a CORESET.

The frequency domain resources occupied by the CORESET are continuous frequency domain resource units; or,
the frequency domain resources occupied by the CORESET are at least two discontinuous groups of frequency domain resource units. The group of frequency domain resource units is obtained by dividing a plurality of frequency domain resource unit based on one of at least two granularities.

Alternatively, the indication information is configured to determine a start position of the frequency domain resources occupied by the CORESET and a size of the frequency domain resources occupied by the CORESET.

The start position of the frequency domain resources occupied by the CORESET and the size of the frequency domain resources occupied by the CORESET are configured to determine the frequency domain resources occupied by the CORESET.

Alternatively, the indication information is configured to determine a size of the frequency domain resources occupied by the CORESET.

The size of the frequency domain resources occupied by the CORESET is configured to determine the frequency domain resources occupied by the CORESET.

Alternatively, the indication information indicates a maximum aggregation level of the terminal and the number of time domain symbols.

The maximum aggregation level of the terminal and the number of the time domain symbols are configured to determine the size of the frequency domain resources occupied by the CORESET, in which there is a function relationship among the size of the frequency domain resources, the maximum aggregation level of the terminal and the number of the time domain symbols.

The size of the frequency domain resources occupied by the CORESET is configured to determine the frequency domain resources occupied by the CORESET.

Alternatively, the indication information includes at least one bit, and the indication information indicates a position of at least one group of frequency domain resource units in the plurality of frequency domain resource units configured by the network device.

Alternatively, in response to there being a remaining REG that is not mapped to a CCE, the remaining REG is released.

Alternatively, the size of the frequency domain resources matches a bandwidth supported by the terminal.

Alternatively, the granularity is determined based on at least one of:
granularity indication information;
a bandwidth supported by the terminal;
the number of bits of the indication information;
the number of REGs occupied by a CCE; or
the number of time domain symbols configured by the network device.

Alternatively, the CORESET is CORESET#0, the indication information is RMSI, and the indication information is configured to determine a length of the frequency domain resources for the CORESET#0 and the corresponding number of symbols for the CORESET#0 from at least one combination of the length of the frequency domain resources and the corresponding number of symbols agreed by a protocol.

With the apparatus for configuring frequency domain resources in the embodiment, the indication information is sent to the terminal. The indication information is configured to determine the frequency domain resources occupied by the CORESET, the frequency domain resources occupied by the CORESET are continuous frequency domain resource units; or, the frequency domain resources occupied by the CORESET are at least two discontinuous groups of frequency domain resource units. The group of frequency domain resource units is obtained by dividing the plurality of frequency domain resource unit based on one of at least two granularities. By changing an allocation way on the frequency domain resources for the terminal or flexibly configuring the allocated granularity of the frequency domain resources, the terminal may support a larger aggregation level as much as possible, thus effectively improving a transmission performance of a downlink channel, enhancing a coverage of the downlink channel, improving a system communication efficiency, effectively reducing the resource waste, and improving a resource utilization rate.

In order to implement the above embodiments, an embodiment of the disclosure further provides a communication device, including a processor and a memory, in which the memory stores a computer program, and the processor executes the computer program stored in the memory, to enable the device to execute the methods of the embodiments illustrated in FIGs. 2 to 6.

In order to implement the above embodiments, an embodiment of the disclosure further provides a communication device, including a processor and a memory, in which the memory stores a computer program, and the processor is configured to execute the computer program stored in the memory, to enable the device to execute the methods of the embodiments illustrated in FIG. 7.

In order to implement the above embodiments, an embodiment of the disclosure further provides a communication device, including a processor and an interface circuit, in which the interface circuit is configured to receive code instructions and transmit the code instructions to the processor, and the processor is configured to run the code instructions to execute the methods of the embodiments illustrated in FIGS. 2 to 6.

In order to implement the above embodiments, an embodiment of the disclosure further provides a communication device, including a processor and an interface circuit, in which the interface circuit is configured to receive code instructions and transmit the code instructions to the processor, and the processor is configured to run the code instructions to execute the methods of the embodiments illustrated in FIGS. 7.

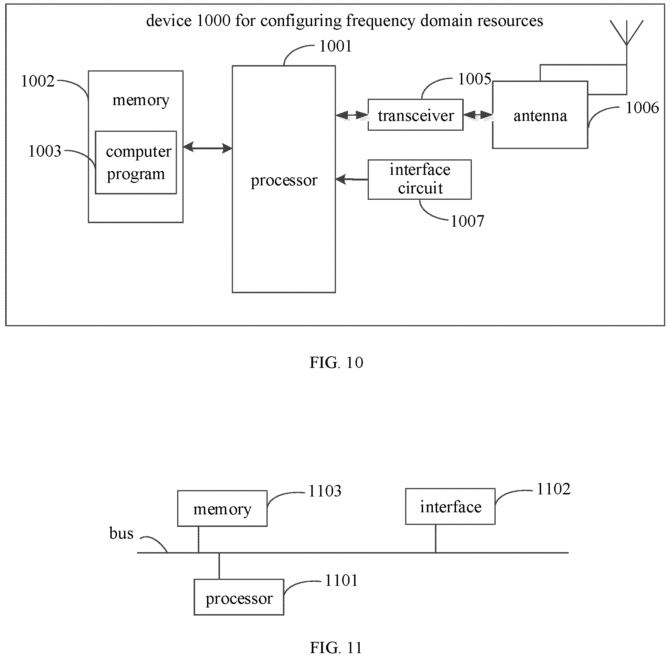

Referring to FIG. 10, FIG. 10 is a block diagram illustrating a device for configuring frequency domain resources according to another embodiment of the disclosure. The device 1000 for configuring frequency domain resources may be a network device, may be a terminal, may be a chip, a chip system, a processor or the like that supports the network device to implement the above method, or may be a chip, a chip system, a processor or the like that supports the terminal to realize the above method. The device may be configured to implement the methods described in the above method embodiments. For details, please refer to the description in the above method embodiments.

The device 1000 for configuring frequency domain resources may include one or more processors 1001. The processor 1001 may be a general-purpose processor or a dedicated processor or the like, such as a baseband processor or a central processing unit. The baseband processor may be configured to process a communication protocol and communication data. The central processing unit may be configured to control a device (such as, a base station, a baseband chip, a terminal, a terminal chip, a DU, or a CU) for configuring frequency domain resources, to execute a computer program, and to process data of the computer program.

Alternatively, the device 1000 for configuring frequency domain resources may further include one or more memories 1002 having a computer program 1003 stored thereon. The processor 1001 is configured to execute the computer program 1003, to enable the device 1000 for configuring frequency domain resources to execute the method described in the above method embodiments. The computer program 1003 may be cured in the processor 1001, and in this case, the processor 1001 may be implemented by hardware.

Alternatively, the one or more memories 1002 may further store data. The device 1000 for configuring frequency domain resources and the memory 1002 may be separately disposed, or may be integrated together.

Alternatively, the device 1000 for configuring frequency domain resources may further include a transceiver 1005 and an antenna 1006. The transceiver 1005 may be referred to as a transceiver unit, a transceiver, a transceiver circuit or the like for realizing a transceiver function. The transceiver 1005 may include a receiver and a transmitter. The receiver may be referred to as a receiver or a receiving circuit, for realizing a receiving function. The transmitter may be referred to as a transmitter or a transmitting circuit for implementing a transmitting function.

Alternatively, the device 1000 for configuring frequency domain resources may further include one or more interface circuits 1007. The interface circuit 1007 is configured to receive code instructions and transmit the code instructions to the processor 1001. The processor 1001 runs the code instructions to enable the device 1000 for configuring frequency domain resources to execute the method described in the above method embodiments.

In an implementation, the processor 1001 may include a transceiver for realizing a receiving and transmitting function. For example, the transceiver may be a transceiver circuit, an interface, or an interface circuit. The transceiver circuit, the interface, or the interface circuit for realizing the receiving and sending functions may be separate or integrated together. The transceiver circuit, the interface, or the interface circuit may be configured to read and write codes/data, or the transceiver circuit, the interface, or the interface circuit may be configured to signal transmission or transmission.

In an implementation, the device 1000 for configuring frequency domain resources may include a circuit, and the circuit may realize a function of sending, receiving or communicating in the above method embodiments. The processor and the transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The apparatus for configuring frequency domain resources described in the foregoing embodiment may be a network device or a terminal, but the scope of the device for configuring frequency domain resources described in the disclosure is not limited thereto, and a structure of the device for configuring frequency domain resources may not be limited by FIG. 8 to FIG. 9. The device for configuring frequency domain resources may be a standalone device or may be part of a larger device. For example, the device for configuring frequency domain resources may be:
(1) a stand-alone IC, a chip, a chip system or a subsystem;
(2) a collection of ICs including one or more ICs, alternatively, the collection of ICs may also include storage components for storing data and computer programs;
(3) an ASIC, such as a modem;
(4) modules that may be embedded in other devices;
(5) a receiver, a terminal, a smart terminal, a cellular phone, a wireless device, a handheld machine, a mobile unit, an in-vehicle device, a network device, a cloud device, an artificial intelligence device, and the like; or
(6) others.

The case where the device for configuring frequency domain resources may be the chip or the chip system is described with reference to the schematic structure of the chip illustrated in FIG. 11. The chip illustrated in FIG. 11 includes a processor 1101 and an interface 1102. There may be one or more processors 1101, and there may be more than one interface 1102.

In the case that the chip is configured to realize a function of the network device in the embodiments of the disclosure,
the interface 1102 is configured to receive code instructions and transmit the code instructions to the processor; and
the processor 1101 is configured to run the code instructions to execute the methods as illustrated in FIGs. 2 to 6.

In the case that the chip is configured to realize a function of the terminal in the embodiments of the disclosure.
the interface 1102 is configured to receive code instructions and transmit the code instructions to the processor; and
the processor 1101 is configured to run the code instructions to execute the method as illustrated in FIG. 7.

Alternatively, the chip further includes a memory 1103. The memory 1103 is configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of the entire system. Those skilled in the art may, for each particular application, use various methods to execute the described function, but such implementation should not be understood as beyond the scope of protection of embodiments of the disclosure.

Embodiments of the disclosure further provide a communication system. The system includes an apparatus for configuring frequency domain resources serving as the terminal and an apparatus for configuring frequency domain resources serving as the network device in the above embodiments in FIGs. 8 to 9, or the system includes a device for configuring frequency domain resources serving as the terminal and a device for configuring frequency domain resources serving as the network device in the above embodiment in FIG. 10.

The disclosure further provides a readable storage medium having instructions stored thereon. When the instructions are executed by a computer, the functions according to any of the above method embodiments are realized.

The disclosure further provides a computer program product. When the computer program product is executed by a computer, the functions according to any of the foregoing method embodiments are realized.

The above embodiments may be implemented in whole or in part by software, hardware, firmware, or any combination thereof. When implemented using software, the above embodiments may be implemented, in whole or in part, in the form of the computer program product. The computer program product includes one or more computer programs. When loading and executing the computer program in the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired way (e.g., using coaxial cables, fiber optics, or digital subscriber lines (DSLs) or wireless way (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that various numerical numbers such as the first, second, and the like involved in the disclosure are only described for the convenience of differentiation, and are not used to limit the scope of embodiments of the disclosure, or used to indicate the order of precedence.

The term "at least one" in the disclosure may also be described as one or more, and the term "more than one" may be two, three, four, or more, which is not limited in the disclosure. In embodiments of the disclosure, for a type of technical features, the term "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondence illustrated in tables in the disclosure may be configured, or may be predefined. Value of information in each table is merely an example, and may be configured as other values, which is not limited in the disclosure. When a correspondence between information and each parameter is configured, there does not require to configure all correspondences illustrated in the tables. For example, in the tables in the disclosure, the correspondence illustrated in some rows may also be not configured. For another example, appropriate deformation adjustment may be performed based on the above tables, for example, splitting, merging, and the like. Names of titles illustrated in the above tables may also use other names that may be understood by the communication apparatus, and values or representations of the parameters may also be other values or representations that may be understood by the communication apparatus. When each of the above tables is realized, other data structures may be used. For example, an array, a queue, a container, a stack, a linear table, a pointer, a linked list, a tree, a graph, a structure, a class, a heap, a hash table and the like may be used.

Predefining in the disclosure may be understood as defining, pre-defining, storing, pre-storing, pre-negotiating, pre-configuring, curing, or pre-firing.

The ordinary skill in the art may be aware that units and algorithm steps of the examples described in connection with the embodiments disclosed herein may be implemented by an electronic hardware, or a combination of computer software and the electronic hardware. Whether the functions are performed by hardware or software depends on a specific application and a design constraint condition of the technical solution. Those skilled in the art may use different methods to realize the described functions for each specific application, but it should not be considered that such realization goes beyond the scope of the disclosure.

Those skilled in the art may clearly understand that, for the convenience and brevity of description, a specific working process of the described system, apparatus, and the unit may refer to a corresponding process in the above method embodiments, which is not described herein again.

It should be understood that, various forms of procedures illustrated above may be configured to reorder, add or delete blocks. For example, blocks described in the disclosure may be executed in parallel, sequentially, or in a different order, as long as the desired result of the technical solution disclosed in the disclosure may be achieved, which will not be limited herein.

The above detailed implementations do not constitute a limitation on the protection scope of the disclosure. Those skilled in the art should understand that various modifications, combinations, sub-combinations and substitutions may be made based on a design requirement and other factors. Any modification, equivalent replacement, improvement, etc., made within the spirit and principle of embodiments of the disclosure shall be included within the protection scope of embodiments of the disclosure.

## Claims

1. A method for configuring frequency domain resources, performed by a terminal, comprising:
receiving indication information sent by a network device; and
determining frequency domain resources occupied by a control resource set (CORESET) based on the indication information;
wherein the frequency domain resources occupied by the CORESET are continuous frequency domain resource units; or,
the frequency domain resources occupied by the CORESET are at least two discontinuous groups of frequency domain resource units, and the group of frequency domain resource units is obtained by dividing a plurality of frequency domain resource units based on one of at least two granularities.

2. The method of claim 1, wherein determining the frequency domain resources occupied by the CORESET based on the indication information comprises:
determining a start position of the frequency domain resources occupied by the CORESET and a size of the frequency domain resources occupied by the CORESET based on the indication information.

3. The method of claim 1, wherein determining the frequency domain resources occupied by the CORESET based on the indication information comprises:
obtaining a start position of the frequency domain resources occupied by the CORESET specified by a protocol;
determining a size of the frequency domain resources occupied by the CORESET based on the indication information; and
determining the frequency domain resources occupied by the CORESET based on the start position of the frequency domain resources occupied by the CORESET and the size of the frequency domain resources.

4. The method of claim 1, wherein determining the frequency domain resources occupied by the CORESET based on the indication information comprises:
obtaining a start position of the frequency domain resources occupied by the CORESET specified by a protocol;
wherein the indication information indicates a maximum aggregation level of the terminal and a number of time domain symbols;
determining a size of the frequency domain resources occupied by the CORESET based on the maximum aggregation level of the terminal and the number of the time domain symbols, wherein there is a function relationship among the size of the frequency domain resources, the maximum aggregation level of the terminal and the number of the time domain symbols; and
determining the frequency domain resources occupied by the CORESET based on the start position of the frequency domain resources occupied by the CORESET and the size of the frequency domain resources.

5. The method of claim 1, wherein the indication information comprises at least one bit, and the indication information indicates a position of at least one group of frequency domain resource units in the plurality of frequency domain resource units configured by the network device.

6. The method of any of claims 1 to 5, further comprising:
in response to there being a remaining resource element group (REG) that is not mapped to a control channel element (CCE), releasing the remaining REG.

7. The method of any of claims 1 to 4, wherein a size of the frequency domain resources matches a bandwidth supported by the terminal.

8. The method of claim 5, wherein the granularity is determined based on at least one of:
granularity indication information;
a bandwidth supported by the terminal;
a number of bits of the indication information;
a number of resource element groups (REGs) occupied by a control channel element (CCE); or
a number of time domain symbols configured by the network device.

9. The method of claim 1, wherein the CORESET is CORESET#0, the indication information is remaining minimum system information (RMSI), and the indication information is configured to determine a length of the frequency domain resources for the CORESET#0 and a corresponding number of symbols for the CORESET#0 from at least one combination of the length of the frequency domain resources and the corresponding number of symbols agreed by a protocol.

10. A method for configuring frequency domain resources, performed by a network device, comprising:
sending indication information to a terminal;
wherein, the indication information is configured to determine frequency domain resources occupied by a control resource set (CORESET);
the frequency domain resources occupied by the CORESET are continuous frequency domain resource units; or,
the frequency domain resources occupied by the CORESET are at least two discontinuous groups of frequency domain resource units, and the group of frequency domain resource unit is obtained by dividing a plurality of frequency domain resource units based on one of at least two granularities.

11. The method of claim 10, wherein the indication information is configured to determine a start position of the frequency domain resources occupied by the CORESET and a size of the frequency domain resources occupied by the CORESET.

12. The method of claim 10, wherein, the indication information is configured to determine a size of the frequency domain resources occupied by the CORESET; and
the size of the frequency domain resources occupied by the CORESET is configured to determine the frequency domain resources occupied by the CORESET.

13. The method of claim 10, wherein,
the indication information indicates a maximum aggregation level of the terminal and a number of time domain symbols;
the maximum aggregation level of the terminal and the number of the time domain symbols are configured to determine a size of the frequency domain resources occupied by the CORESET, wherein there is a function relationship among the size of the frequency domain resources, the maximum aggregation level of the terminal and the number of the time domain symbols; and
the size of the frequency domain resources occupied by the CORESET is configured to determine the frequency domain resources occupied by the CORESET.

14. The method of claim 10, wherein the indication information comprises at least one bit, and the indication information indicates a position of at least one group of frequency domain resource units in the plurality of frequency domain resource units configured by the network device.

15. The method of any one of claims 10 to 14, further comprising:
in response to there being a remaining resource element group (REG) that is not mapped to a control channel element (CCE), releasing the remaining REG.

16. The method of any one of claims 10 to 13, wherein a size of the frequency domain resources matches a bandwidth supported by the terminal.

17. The method of claim 14, wherein the granularity is determined based on at least one of:
granularity indication information;
a bandwidth supported by the terminal;
a number of bits of the indication information;
a number of resource element groups (REGs) occupied by a control channel element (CCE); or
a number of time domain symbols configured by the network device.

18. The method of claim 10, wherein the CORESET is CORESET#0, the indication information is remaining minimum system information (RMSI), and the indication information is configured to determine a length of the frequency domain resources for the CORESET#0 and a corresponding number of symbols for the CORESET#0 from at least one combination of the length of the frequency domain resource and the corresponding number of symbols agreed by a protocol.

19. An apparatus for configuring frequency domain resources, applied to a terminal, comprising:
a transceiving unit, configured to receive indication information sent by a network device; and
a processing unit, configured to determine frequency domain resources occupied by a control resource set (CORESET) based on the indication information;
wherein the frequency domain resources occupied by the CORESET are continuous frequency domain resource units; or,
the frequency domain resources occupied by the CORESET are at least two discontinuous groups of frequency domain resource units, and the group of frequency domain resource unit is obtained by dividing a plurality of frequency domain resource units based on one of at least two granularities.

20. The apparatus of claim 19, wherein the processing unit is configured to:
determine a start position of the frequency domain resources occupied by the CORESET and a size of the frequency domain resources occupied by the CORESET based on the indication information.

21. The apparatus of claim 19, wherein the processing unit is configured to:
obtain a start position of the frequency domain resources occupied by the CORESET specified by a protocol;
determine a size of the frequency domain resources occupied by the CORESET based on the indication information; and
determine the frequency domain resources occupied by the CORESET based on the start position of the frequency domain resources occupied by the CORESET and the size of the frequency domain resources.

22. The apparatus of claim 19, wherein the processing unit is configured to:
obtain a start position of the frequency domain resources occupied by the CORESET specified by a protocol;
wherein the indication information indicates a maximum aggregation level of the terminal and a number of time domain symbols;
determine a size of the frequency domain resources occupied by the CORESET based on the maximum aggregation level of the terminal and the number of the time domain symbols, wherein there is a function relationship among the size of the frequency domain resources, the maximum aggregation level of the terminal and the number of the time domain symbols; and
determine the frequency domain resources occupied by the CORESET based on the start position of the frequency domain resources occupied by the CORESET and the size of the frequency domain resources.

23. The apparatus of claim 19, wherein the indication information comprises at least one bit, and the indication information indicates a position of at least one group of frequency domain resource units in the plurality of frequency domain resource units configured by the network device.

24. The apparatus of any one of claims 19 to 23, wherein the processing unit is further configured to:
in response to there being a remaining resource element group (REG) that is not mapped to a control channel element (CCE), release the remaining REG.

25. The apparatus according to any one of claims 19 to 22, wherein a size of the frequency domain resources matches a bandwidth supported by the terminal.

26. The apparatus according to claim 23, wherein the granularity is determined based on at least one of:
granularity indication information;
a bandwidth supported by the terminal;
a number of bits of the indication information;
a number of resource element groups (REGs) occupied by a control channel element (CCE); or
a number of time domain symbols configured by the network device.

27. The apparatus of claim 19, wherein the CORESET is CORESET#0, the indication information is remaining minimum system information (RMSI), and the indication information is configured to determine a length of the frequency domain resources for the CORESET#0 and a corresponding number of symbols for the CORESET#0 from at least one combination of the length of the frequency domain resources and the corresponding number of symbols agreed by a protocol.

28. An apparatus for configuring frequency domain resources, applied to a network device, comprises:
a transceiving unit, configured to send indication information to a terminal;
wherein, the indication information is configured to determine frequency domain resources occupied by a control resource set (CORESET);
the frequency domain resources occupied by the CORESET are continuous frequency domain resource units; or,
the frequency domain resources occupied by the CORESET are at least two discontinuous groups of frequency domain resource units, and the group of frequency domain resource units is obtained by dividing a plurality of frequency domain resource unit based on one of at least two granularities.

29. The apparatus of claim 28, wherein the indication information is configured to determine a start position of the frequency domain resources occupied by the CORESET and a size of the frequency domain resources occupied by the CORESET.

30. The apparatus of claim 28, wherein the indication information is configured to determine a size of the frequency domain resources occupied by the CORESET; and
the size of the frequency domain resources occupied by the CORESET is configured to determine the frequency domain resources occupied by the CORESET.

31. The apparatus of claim 28, wherein,
the indication information indicates a maximum aggregation level of the terminal and a number of time domain symbols;
the maximum aggregation level of the terminal and the number of the time domain symbols are configured to determine a size of the frequency domain resources occupied by the CORESET, wherein there is a function relationship among the size of the frequency domain resources, the maximum aggregation level of the terminal and the number of the time domain symbols; and
the size of the frequency domain resources occupied by the CORESET is configured to determine the frequency domain resources occupied by the CORESET.

32. The apparatus of claim 28, wherein the indication information comprises at least one bit, and the indication information indicates a position of at least one group of frequency domain resource units in the plurality of frequency domain resource units configured by the network device.

33. The apparatus of any one of claims 28 to 32, further comprising:
in response to there being a remaining resource element group (REG) that are not mapped to a control channel element (CCE), releasing the remaining REG.

34. The apparatus according to any one of claims 28 to 31, wherein a size of the frequency domain resources matches a bandwidth supported by the terminal.

35. The apparatus of claim 32, wherein the granularity is determined based on at least one of:
granularity indication information;
a bandwidth supported by the terminal;
a number of bits of the indication information;
a number of resource element groups (REGs) occupied by a control channel element (CCE); or
a number of time domain symbols configured by the network device.

36. The apparatus of claim 28, wherein the CORESET is CORESET#0, the indication information is remaining minimum system information (RMSI), and the indication information is configured to determine a length of the frequency domain resources for the CORESET#0 and a corresponding number of symbols for the CORESET#0 from at least one combination of a length of the frequency domain resources and the corresponding number of symbols agreed by a protocol.

37. A communication device, comprising:
a processor and a memory, wherein the memory has a computer program stored thereon, and the processor is configured to execute the computer program stored in the memory to cause the device to perform the method according to any one of claims 1 to 9.

38. A communication device, comprising:
a processor and a memory, wherein the memory has a computer program stored thereon, and the processor is configured to execute the computer program stored in the memory to cause the device to perform the method according to any one of claims 10 to 18.

39. A communication device, comprising:
a processor and an interface circuit; wherein,
the interface circuit is configured to receive code instructions and transmit the code instructions to the processor; and
the processor is configured to run the code instructions to execute the method according to any one of claims 1 to 9.

40. A communication device, comprising:
a processor and an interface circuit; wherein,
the interface circuit is configured to receive code instructions and transmit the code instructions to the processor; and
the processor is configured to run the code instructions to execute the method according to any one of claims 10 to 18.

41. A computer-readable storage medium storing computer instructions, wherein, when the instructions are executed, the method according to any one of claims 1 to 9 is realized.

42. A computer-readable storage medium storing computer instructions, wherein, when the instructions are executed, the method according to any one of claims 10 to 18 is realized.
